# EUROPEAN PATENT APPLICATION

(11) **EP 1 516 530 A1**
(43) Date of publication of application: **23.03.2005**
(21) Application number: 03103483.8
(22) Date of filing: 22.09.2003
(51) Int. Cl.: A01K 5/00, A01F 25/20

(54) **Movable apparatus for mixing fodder**

(71) Applicant: Trioliet Mullos B.V., 7575 BE Oldenzaal (NL)
(72) Inventor: Trioliet Mullos B.V., 7575 BE Oldenzaal (NL)
(74) Representative: Aalbers, Arnt Reinier

(57) **Abstract**

A movable apparatus for mixing fodder comprises a mixing chamber (1) housing a mixing member (6), an arm (7) extending above the mixing chamber which, driven by driving means, can pivot around a substantially horizontally extending pivot axis (8) and which at a free end comprises a pivotable cutting device (13) for cutting loose fodder from a fodder heap, and further comprising loading means for loading the fodder cut loose into the mixing chamber and a horizontal insertion plate (15) for engaging the fodder heap for the creation of a counter force when the cutting device is operative. For depositing fodder into the mixing chamber, the loading means comprise fodder engagement means (14) cooperating with the cutting device (13) for holding the fodder cut loose from the fodder heap.

## Description

The invention relates to a movable apparatus for mixing fodder, comprising a mixing chamber housing a mixing member, an arm extending above the mixing chamber which, driven by driving means, can pivot around a substantially horizontally extending pivot axis and which at a free end comprises a pivotable cutting device for cutting loose fodder from a fodder heap, and further comprising loading means for loading the fodder cut loose into the mixing chamber.

An apparatus of the type referred to above is already marketed by the company Trioliet Mullos B.V., Losser, The Netherlands with the type indication GIGANT. This known apparatus further comprises a rearwardly projecting, horizontal insertion plate for engaging the fodder heap. In use, the horizontal insertion plate is pushed underneath the fodder heap whereafter the cutting device is manipulated by the arm to cut loose fodder from the fodder heap until the cutting device has reached the insertion plate. The mixing chamber has an opening at one side, which opening will be closed by the cutting device. The fodder cut loose from the fodder heap is pushed by the cutting device over the insertion plate towards the mixing chamber, until the cutting device has closed the mixing chamber. Then the mixing member can be activated.

The above means, that the loading means for loading the fodder cut loose into the mixing chamber is defined by the combination of horizontal insertion plate and cutting device. Once the cutting device has closed the opening in the mixing chamber it cannot be used again until the mixing member has completed its operation. Moreover, filling the mixing chamber with different kinds of fodder, originating from different fodder heaps, is a difficult task, because there is a risk that fodder brought into the mixing chamber will at least partially fall out of the mixing chamber when the cutting device is used for cutting loose a next batch of fodder and thus frees the opening in the mixing chamber.

It is an object of the present invention to provide an improved movable apparatus for mixing fodder of the type referred to above.

Thus, in accordance with the present invention there is provided a movable apparatus for mixing fodder which is characterised in that the loading means comprise fodder engagement means cooperating with the cutting device for holding the fodder cut loose from the fodder heap.

Because the loading means comprise fodder engagement means cooperating with the cutting device it is possible to positively grip fodder cut loose and to lift it into a mixing chamber which has a surrounding wall without an opening. Of course, the mixing chamber will have an open top into which the lifted fodder can be deposited. One big advantage of such an apparatus is, that using the cutting device does not compromise the integrity of the mixing chamber and thus the mixing member can be operated while the cutting device is operative. Filling a number of batches of fodder into the mixing chamber is possible, thus offering the possibility of obtaining mixed fodder with an optimised composition.

In accordance with a preferred embodiment of the apparatus according to the present invention, the fodder engagement means comprise a pressure plate which in an operative position extends substantially vertically and which is movable towards and away from the cutting device in a substantially horizontal direction for clamping therebetween the fodder cut loose. In a position of the pressure plate in which it has been moved away from the cutting device fodder can be cut loose from the fodder heap, during which operation the arm is gradually lowered while the cutting device cuts into the fodder heap. After reaching the desired depth the pressure plate is moved towards the cutting device, thus clamping the fodder cut loose between itself and the cutting device. Raising the arm will than lift the fodder, which can be deposited into the mixing chamber.

Preferably, the pressure plate is hingeably connected to the cutting device. This offers a simple constructive solution for the moveability of the pressure plate relative to the cutting device. It is noted however, that also, for example, a linear shift of the pressure plate is conceivable.

With certain types of fodder only clamping the fodder cut loose between a substantially vertically extending pressure plate and the cutting device (which, as is known per se, will also extend substantially vertically) will not always be sufficient to prevent some fodder from falling down. Thus, in accordance with yet another preferred embodiment of the apparatus in accordance with the present invention, the fodder engagement means further comprises a fodder support plate extending substantially horizontally in the direction of the cutting device for supporting fodder cut loose from the fodder heap. Such a substantially horizontally extending fodder support plate will engage the lower end of the fodder portion cut loose from the fodder heap.

In such a case, the support plate preferably has a sharpened edge facing the cutting device. Such a sharpened edge greatly facilitates the introduction of the support plate underneath the fodder portion cut loose and the separation of said fodder portion from the fodder heap (it should be noted, that the cutting device can only cut loose the fodder portion at three vertically extending sides, and cutting the fodder portion loose at its bottom will now be carried out by the sharpened edge of the support plate). Such a sharpened edge may comprise cutting teeth.

In still another embodiment of the apparatus in accordance with the present invention the pressure plate has a lower edge which ends close to the support plate and which is movable substantially in parallel thereto. When the lower edge of the pressure plate is moved relative to the support plate, fodder resting upon the support plate can be removed from the support plate in an effective manner. This effect may be improved by providing the lower edge of the pressure plate with a flexible member, such as for example a rubber strip, engaging the support plate. As a result the fodder is wiped off in a very effective manner.

For improving the use of the apparatus in accordance with the present invention, an embodiment thereof is provided, wherein the arm can rotate around a substantially vertical rotation axis too. As a result it is also possible to cut/grip fodder beside the apparatus, for example bales.

Further, it is then possible that the arm driving means for pivoting the arm engage the arm between its horizontal pivot axis and its free end and comprise two driving members, such as for example cylinder-piston assemblies, positioned at opposite sides of the mixing chamber which at their upper ends are interconnected by a bridge member slidingly engaging the arm, and which with their lower ends are pivotably connected to the mixing chamber or a frame supporting the mixing chamber.

Because the arm can rotate around said vertical rotation axis too the cutting device can be used not only at a fixed position relative to the mixing chamber (which, normally, is a position straight behind it), but in varying positions, for example also sideways. The position of the arm driving means between the horizontal pivot axis and the free end of the arm enable to generate a large force with the cutting device (which force, as is known per se, is counteracted by the insertion plate). The sliding connection between the bridge member and the arm allows the rotation of the arm notwithstanding its connection to the driving members. As a result, a very versatile apparatus is obtained.

Preferably, the apparatus is mounted on a frame carried by pneumatic tyres, wherein pressure sensors are provided for measuring the pneumatic pressure inside the tyres. Because the pressure inside the tyres varies depending upon the amount of fodder present in the mixing chamber, it is not only possible to determine the amount of fodder introduced into the mixing chamber, but also to determine the amount of fodder discharged from the mixing chamber when feeding animals such as cattle. It is noted however, that a determination of the weight changes of the fodder could also be realised using sensors at other locations, such as the arm or the frame or a leading coupling end of the frame (where it has to be coupled with a tractor).

Fodder comprising long dry fibers or fodder in the shape of bales is difficult to mix. It should be cut into pieces on beforehand. However, cutting such fodder into pieces which are too small can cause problems in the digestive track of cattle. Thus, in accordance with a preferred embodiment of the apparatus the mixing member comprises knife members attached thereto cooperating with movable protection plates which are springloaded towards a position covering the cutting edge of the knife members. When the fodder is introduced into the mixing chamber, it is so compact that it can push the protection plates away against the spring load, such that the knife members become operative. When a certain amount of cutting has occurred, however, the fodder is no longer able to withstand the spring load of the protection plates, such that these move back towards the position covering the cutting edge of the knife members, which then become inoperative.

Preferably, the protection plates can rotate, for example about pivots attached to the mixing member.

A special embodiment of the apparatus is mentioned, in which it is provided with at least one opening in the wall of the mixing chamber which comprises at least one closure member pivotable around a vertical axis and springloaded towards its open position in which it extends into the mixing chamber. When no fodder is present in the mixing chamber the opening in the wall of the mixing chamber is opened and it is possible to (at least partially) look through the mixing chamber which makes manipuliting (driving) the apparatus more easier. Fodder introduced in the mixing chamber and moved along by the mixing member however will engage the closure member extending into the mixing chamber and will move it, against its spring load, towards a closed position in which the opening in the wall of the mixing chamber is closed.

In such a case, it is possible that the vertical pivot axis of the at least one closure member is defined by a rod extending downwardly from said closure member and carrying at its lower end a fodder engagement member which projects substantially in parallel to the closure member. AS a result, the fodder does not have to engage directly the closure member itself, but the fodder engagement member positioned at a lower level.

When, in accordance with a preferred embodiment, the fodder engagement member is a forked rod, it can effectively take care of the rotation of the closure member towards its closed position, however, without the risk of fodder getting entangled therewith.

Hereinafter the invention will be elucidated referring to the drawing, in which embodiments of the apparatus in accordance with the present invention are illustrated.
Figure 1 shows a schematic side elevational view of a first embodiment of the apparatus in accordance with the present invention in a first position;
figures 2-4 show the assembly of cutting device and fodder engagement means applied in the apparatus of fig. 1 in three different positions;
figure 5 shows the apparatus of fig. 1 in another position;
figure 6 shows the apparatus of fig. 1 in yet another position;
figure 7 shows a schematical top plan view of the apparatus of fig. 1 in a rotated position;
figure 8 shows a schematical side elevational view of an alternative embodiment of the apparatus in accordance with the present invention;
figure 9 shows a schematical side elevational view of yet another embodiment of the apparatus in accordance with the present invention;
figure 10 shows a top plan view of the apparatus of fig. 9 in a rotated position;
figure 11 shows details of knife members with protection plates;
figure 12 shows details of a mixing chamber with an opening having closure members, and
figure 13 shows a detail of the cutting device.

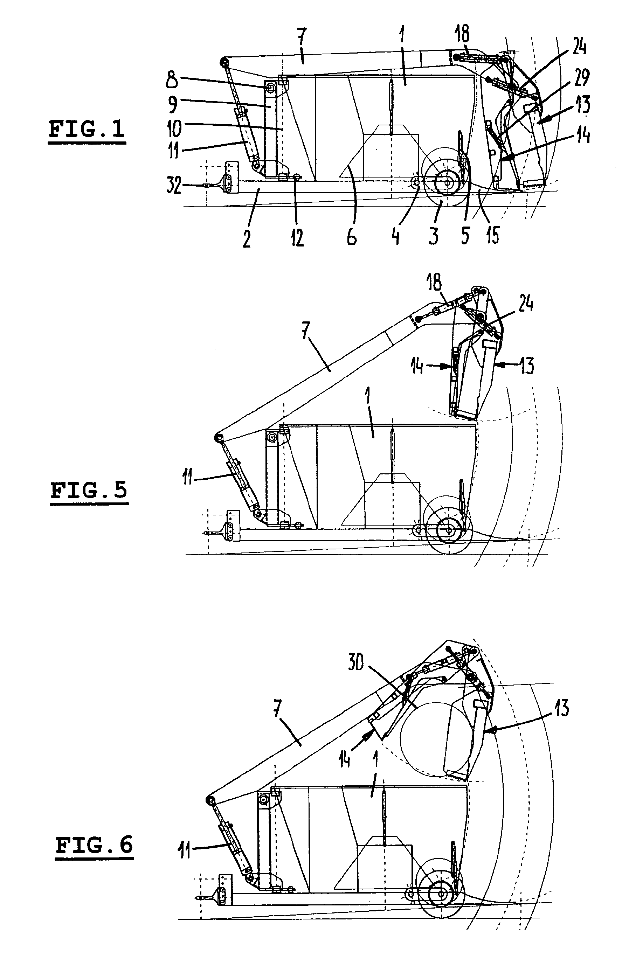

Firstly referring to fig. 1, there is shown a first embodiment of a movable apparatus for mixing fodder. The apparatus comprises a mixing chamber 1 mounted on a frame 2. The frame 2 is supported by wheels 3 which, in the present case, are attached to pivot arms 4 movable by piston-cylinder assemblies 5. Upon activation of the piston-cylinder assemblies 5 the position of the wheels 3 relative to the frame 2 can be changed, such that the entire apparatus can be lifted or lowered. This is known per se.

The mixing chamber 1 houses a mixing member 6 which, for example, has a spiral shape (as is known per se).

An arm 7 extends above the mixing chamber 1 and is attached to a pivot 8 defining a horizontally extending pivot axis, said pivot 8 being attached to a vertical member 9 which, in a manner not explained in detail here, can rotate around a vertically extending rotation axis 10.

The pivotal movement of the arm 7 around the pivot 8 is caused by a driving means 11, for example a piston-cylinder assembly. In a corresponding manner, the rotation of the vertical member 9 with arm 7 around the rotation axis 10 is caused by a driving means 12 (for example a piston-cylinder assembly) engaging the vertical member 9.

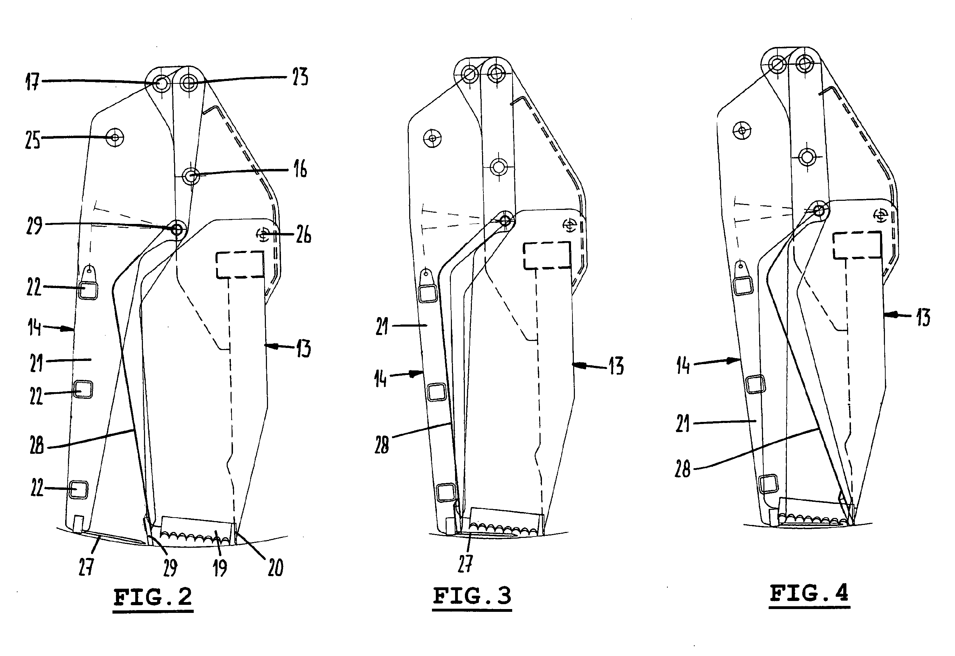

At is free end (that is, the end farthest away from the pivot 8) the arm 7 carries an assembly comprising a cutting device 13 and a fodder engagement means 14. Details of this assembly of cutting device 13 and fodder engagement means 14 will be explained under reference to figures 2-4.

Finally, the apparatus may comprise a horizontal insertion plate 15, the function of which will become clear later.

Next, reference is made to figures 2-4 which show the assembly of cutting device 13 and fodder engagement means 14 on a larger scale. As will be evident, some components represented in fig. 1 have been omitted for the sake of clarity.

The cutting device 13 (which, in a manner known, comprises a U-shaped cutting frame for cutting loose fodder from a fodder heap, for example silage) comprises a pivot 16 by means of which it is pivotably connected to the free end of the arm 7. At its top end the cutting device 13 is provided with an eye 17 at which a driving means 18 (see fig. 1) is attached which, with its other end, is attached to the arm 7. Activation of the driving means 18 (which, as is known per se, may comprise a piston-cylinder assembly) will lead to a rotation of the cutting means 13 around pivot 16.

Figure 2 shows, at the lower end of the cutting device 13, cutting knives 19 en 20 which, together, define the U-shaped cutting frame.

The fodder engagement means 14 comprises two side plates 21 connected by cross members 22 extending transversally. The side plates 21 are hinged to the cutting device 13 at hinges 23. A hinging movement of the fodder engagement means 14 relative to the cutting device 13 will be generated by a driving means 24 (see fig. 1) connected to eyes 25 and 26 on the fodder engagement means 14 and cutting device 13, respectively.

At its lower end the fodder engagement means 14 is provided with a fodder support plate 27 extending substantially horizontally in the direction of the cutting device 13.

The fodder engagement means 14 further comprises a pressure plate 28 hingeably connected thereto at hinge 29. Movement of the pressure plate 28 relative to the side plates 21 of the fodder engagement means 14 is obtained by means of a further driving means 29 (see fig. 1) attached to the side plates 21 and pressure plate 28, respectively. This also may be a spring springloading the pressure plate 28 towards the cutting device 13. Further the pressure plate can comprise two or more independent segments positioned side-by-side.

At its free lower end the pressure plate 28 comprises a flexible member 29, such as for example a rubber strip, ending close to the support plate 27 or even engaging it.

When using the apparatus according to fig. 1, the driving means 11 is activated such as to pivot the arm 7 towards a position in which the assembly of cutting device 13 and fodder engagement means 14 is lifted. Then the apparatus is moved rearwardly until the insertion plate 15 has been positioned underneath a fodder heap (not represented).

By means of an appropriate manipulation of driving means 18, 24 and 29 the assembly of cutting device 13 and fodder engagement means 14 is positioned as represented in fig. 2. Then, upon an appropriate activation of the driving means 11, the arm 7 is lowered again, such that the cutting knives 19 and 20 of the cutting device 13 will cut through the fodder in de fodder heap. During such a cutting motion the insertion plate 15 will create a counter force preventing the apparatus from lifting itself.

When the fodder has been cut to the desired depth, the downward motion of the arm 7 is stopped and driving means 24 is activated such that the fodder engagement means 14 is rotated towards the cutting device 13. As a result, the fodder support plate 27, which preferably has a sharpened edge (or teeth) facing the cutting device 13, cuts through the fodder horizontally, thus entirely loosening an amount of fodder from the fodder heap. During such a rotation of the fodder engagement means 14 with fodder support plate 27 the pressure plate 28 is rotated relative to the side plates 21, as follows clearly form fig. 3.

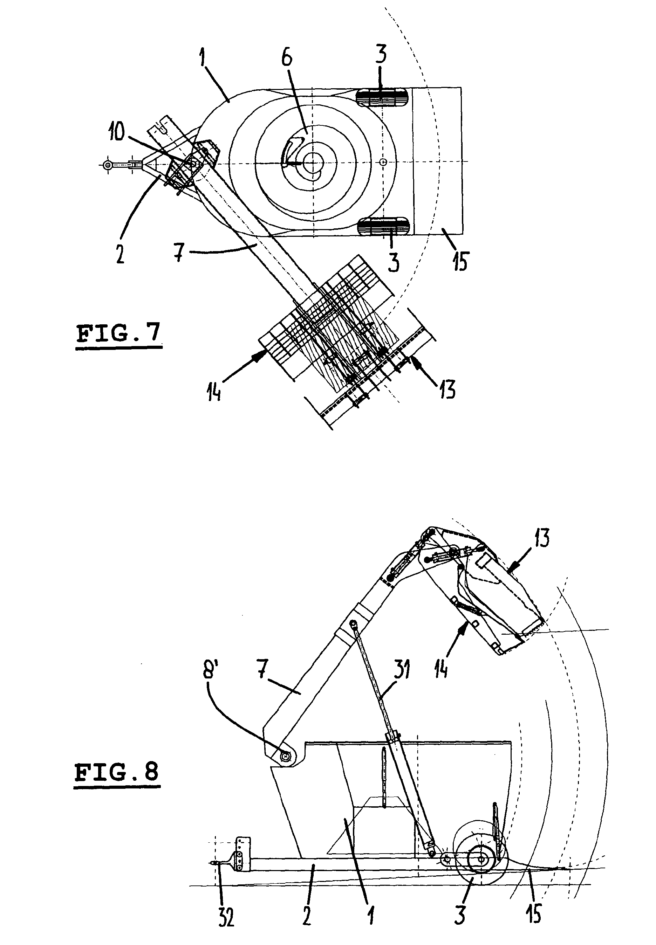

Figure 3 shows the situation, in which an amount of fodder (not shown) has been cut loose entirely from a fodder heap and has been clamped between the cutting device 13 and fodder engagement means 14 with fodder support plate 27. In this situation, the arm 7 is lifted again and, after having reached an appropriate height, the assembly of cutting device 13 and fodder engagement means 14 is rotated inwardly towards a position as represented in fig. 5.

It is noted, that in the figures the fodder and fodder heap are not represented. However, it should be realised that in fig. 3 fodder is present between the cutting device 13 and pressure plate 28.

The position of the assembly of cutting device 13 and fodder engagement means 14 illustrated in fig. 3 basically corresponds with the position illustrated in fig. 5. Next, referring to fig. 6, upon activation of driving means 24 the fodder engagement means 14 can be rotated away from the cutting device 13, such as to release the fodder present between these parts. Also driving means 29 may be activated such that the pressure plate 28 rotates relative to the side plates 21 of the fodder engagement means 14, thus pushing any fodder off the fodder support plate 27. During such a rotation of the pressure plate 28 its flexible member 29 will wipe off the fodder support plate 27 in a very effective manner.

Figure 4 shows a situation, in which the pressure plate 28 has been rotated for wiping off the fodder support plate 27; however, in the situation illustrated in fig. 4 the cutting device 13 and fodder engagement means 14 have not been moved apart, such as is the case in fig. 6.

When, as illustrated in fig. 6, the cutting device 13 and fodder engagement means 14 have been moved apart, fodder will fall down into the mixing chamber 1 and can be mixed by means of the mixing member 6.

In fig. 6 there has been illustrated schematically a circular bale 30 as an example of a differently shaped amount of fodder which can be gripped by the apparatus and can be deposited into the mixing chamber 1. Obviously, such a bale 30 does not have to be cut loose by the cutting device 13.

In fig. 7 the apparatus of fig. 1 is shown in a top plan view. It is clearly visible, that the arm 7 with cutting device 13 and fodder engagement means 14 has been rotated around the rotation axis 10. As a result, also fodder, preferably bales, positioned at other locations then straight behind the apparatus, such as sideways, can be cut and gripped.

Fig. 8 shows an alternative embodiment of the apparatus, comprising an arm 7 which can pivot around a horizontally extending pivot axis 8'. For pivoting the arm 7 around the pivot axis 8' driving means 31 (for example piston-cylinder assemblies) are applied engaging the arm 7 between its horizontal pivot axis 8' and its free end. Preferably there are two driving member 31 positioned at opposite sides of the mixing chamber 1. Compared to the position of the driving means 11 in the embodiment of fig. 1, the position of the driving means 31 allows to generate larger cutting forces at the cutting device 13 when engaging a fodder heap.

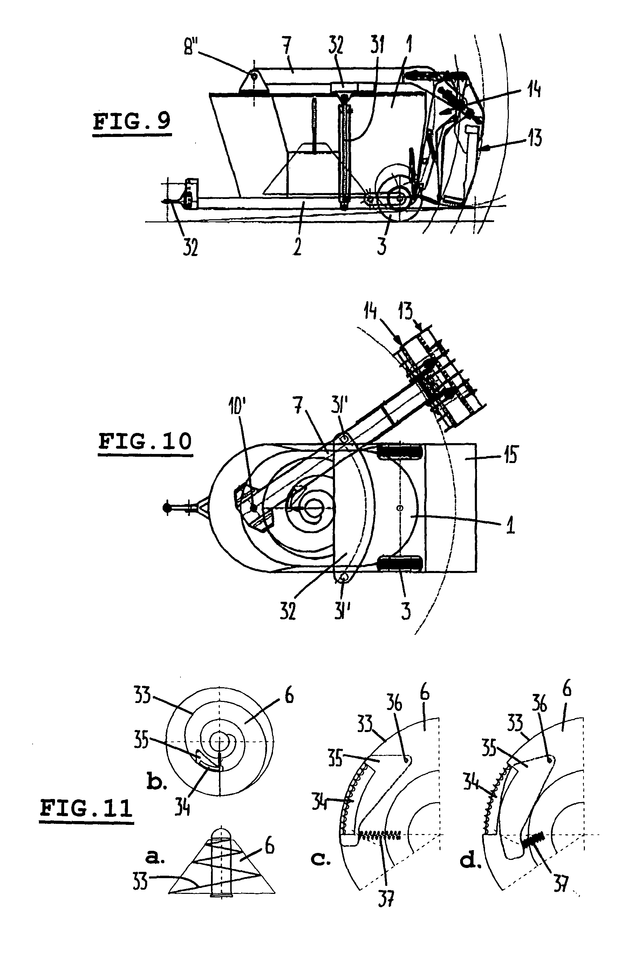

When, in accordance with fig. 8, driving means 31 are applied engaging the arm 7 at the illustrated position, and when the arm 7 should also be able to rotate around a vertically extending rotation axis (such as in fig. 7), a special embodiment of the apparatus is needed. An example of such an embodiment is illustrated in fig. 9 and 10. Fig. 9 is a side elevational view and fig. 10 a top plan view of this embodiment. Two driving means 31' are, at their upper ends, interconnected by a bridge member 32 slidingly engaging the arm 7. As a result, a rotation of the arm 7 around rotation axis 10' is possible while still allowing a pivotal motion of the arm 7 around pivot axis 8".

The lower ends of the driving means 31 (fig.8) or 31' (fig. 9) are attached to the frame 2 or mixing chamber 1.

For controlling the amount of fodder deposited into the mixing chamber 1 (or discharged therefrom after mixing) the pneumatic tyres 3 of the apparatus can be provided with pressure sensors for measuring the pneumatic pressure inside these tyres 3. The registrated pressure change is an indication of weight changes. However, as an alternative also measurements could be carried out at other locations, such as for example the arm 7 or the frame 2 (especially at a coupling member 32 to be coupled with a tractor).

Referring tot fig. 11, a schematic side elevational view (a) and top plan view (b) are illustrated of a mixing member 6 shaped as a spiral member. Attached to its spiral edge 33 are knife members 34 (only one of which has been shown) cooperating with a movable protection plate 35. The protection plate 35 is connected to the mixing member 6 by a pivot 36 and is springloaded by a spring 37 towards a position (fig. 11c) in which it covers the knife member 34. Fig. 11d shows a position, in which the protection plate 35 has been moved towards a position in which it does not cover the knife member 34.

The construction illustrated in fig. 11 allows to stop the cutting action of the knife members 34 when the fodder has been cut sufficiently and then no longer can push the protection plates 35 towards the position of fig. 11d.

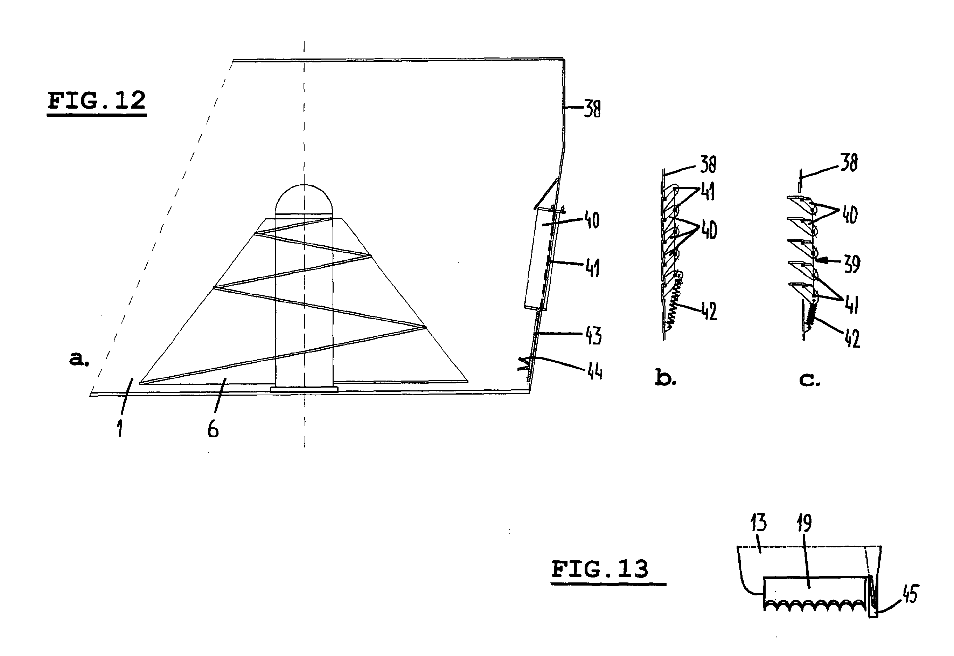

In fig. 12 a part of the mixing chamber 1 with mixing member 6 has been illustrated schematically. In a wall 38 of the mixing chamber 1 an opening 39 (fig. 12c) is defined which can be closed by closure members 40. Each closure member 40 can rotate around a vertical axis 41. A spring 42 is provided springloading the closure members 40 towards their open position illustrated in fig. 12c.

Fig. 12a further shows a downwardly extending rod 43 carrying at its lower end a fodder engagement member, such as a forked rod 44.

Normally the closure members 40 are positioned as illustrated in fig. 12c, thus freeing the opening 39. When fodder is present in the mixing chamber 1 and is moved by the mixing member 6, this fodder will engage the forked rod 44 thus rotating the rod 43 and thus rotating the closure members 40 against the spring load of spring 42 towards a closed position as illustrated in fig. 12b. In the open position as illustrated in fig. 12c the opening 39 allows to see through the wall 38, thus making manoeuvring the apparatus easier for a driver.

Finally, fig. 13 shows a detail of a cutting knife 19 (or cutting knife 20) comprising a downwardly extending abutment means 45 which prevents the cutting knife 19 from contacting a ground surface when the cutting device 13 is moved downwards entirely through a fodder heap. Without such an abutment means 45 there would be a risk of damaging the cutting knife 19.

Some (or all) of the driving means applied in the apparatus may have well-defined end positiond defining certain preferred positions of the apparatus. Control means may be applied for controlling the operation of (some of) the driving means. For example, control means could prevent an inward tilting motion of the assembly of cutting device 13 and fodder engagement means 14 until it has surpassed the upper edge of the mixing chamber 1.

The invention is not limited to the embodiments described before which may be varied widely within the scope of the invention as defined by the appending claims.

## Claims

1. Movable apparatus for mixing fodder, comprising a mixing chamber housing a mixing member, an arm extending above the mixing chamber which, driven by driving means, can pivot around a substantially horizontally extending pivot axis and which at a free end comprises a pivotable cutting device for cutting loose fodder from a fodder heap, and further comprising loading means for loading the fodder cut loose into the mixing chamber, **characterized in that** the loading means comprise fodder engagement means cooperating with the cutting device for holding the fodder cut loose from the fodder heap.

2. Apparatus according to claim 1, wherein the fodder engagement means comprise a pressure plate which in an operative position extends substantially vertically and which is movable towards and away from the cutting device in a substantially horizontal direction for clamping therebetween the fodder cut loose.

3. Apparatus according to claim 2, wherein the pressure plate is hingeably connected to the cutting device.

4. Apparatus according to claim 2 or 3, wherein the fodder engagement means further comprises a fodder support plate extending substantially horizontally in the direction of the cutting device for supporting fodder cut loose from the fodder heap.

5. Apparatus according to claim 4, wherein the support plate has a sharpened edge facing the cutting device.

6. Apparatus according to claim 4 or 5, wherein the pressure plate has a lower edge which ends close to the support plate and which is is movable substantially in parallel thereto.

7. Apparatus according to claim 6, wherein the lower edge of the pressure plate comprises a flexible member, such as for example a rubber strip, engaging the support plate.

8. Apparatus according to any of the claims 2-7, wherein the pressure plate comprises at least two independently movable pressure plate segments positioned in a side-by-side relation.

9. Apparatus according to any of the claims 2-8, wherein the pressure plate is springloaded towards the cutting device.

10. Apparatus according to any of the previous claims, wherein the arm can rotate around a substantially vertical rotation axis too.

11. Apparatus according to claim 10, wherein the arm driving means for pivoting the arm engage the arm between its horizontal pivot axis and its free end and comprise two driving members, such as for example cylinder-piston assemblies, positioned at opposite sides of the mixing chamber which at their upper ends are interconnected by a bridge member slidingly engaging the arm, and which with their lower ends are pivotably connected to the mixing chamber or a frame supporting the mixing chamber.

12. Apparatus according to any of the previous claims, mounted on a frame carried by pneumatic tyres, wherein pressure sensors are provided for measuring the pneumatic pressure inside the tyres.

13. Apparatus according to any of the previous claims, wherein the mixing member comprises knife members attached thereto cooperating with movable protection plates which are springloaded towards a position covering the cutting edge of the knife members.

14. Apparatus according to claim 13, wherein the protection plates can rotate.

15. Apparatus according to any of the previous claims, provided with at least one opening in the wall of the mixing chamber which comprises at least one closure member pivotable around a vertical axis and spring loaded towards its open position in which it extends into the mixing chamber.

16. Apparatus according to claim 15, wherein the vertical pivot axis of the at least one closure member is defined by a rod extending downwardly from said closure member and carrying at its lower end a fodder engagement member which projects substantially in parallel to the closure member.

17. Apparatus according to claim 16, wherein the fodder engagement member is a forked rod.
